# EUROPEAN PATENT SPECIFICATION

(11) **EP 4 405 530 B1**
(45) Date of publication and mention of the grant of the patent: **22.07.2026**
(21) Application number: 22768911.4
(22) Date of filing: 24.08.2022
(51) Int. Cl.: E02B 17/00, B23D 57/00, B08B 9/023, B08B 3/02, B24C 1/04, F03D 80/50

(54) **APPARATUS FOR SERVICING A STRUCTURE**
VORRICHTUNG ZUR WARTUNG EINER STRUKTUR
APPAREIL D'ENTRETIEN D'UNE STRUCTURE

(30) Priority: 20.09.2021 GB 202113391
(43) Date of publication of application: 31.07.2024
(73) Proprietor: Rototech Pte Ltd., Singapore 118518 (SG)
(72) Inventor: HARTOG, Simon, Singapore 118518 (SG)
(74) Representative: Cross, James Peter Archibald
(86) International application number: PCT/GB2022/052179
(87) International publication number: WO 2023/041894

(56) References cited:
- CN-A- 110 977 708
- US-A1- 2014 158 171
- US-B1- 6 371 696

## Description

### Field of the Invention

The present invention relates to apparatus for servicing a structure, such as a support structure including but not limited to marine support structures such as risers, conductors, caissons piles, or legs for marine platforms, jetties or wharves, or pipes, and land-based or offshore structures such as wind turbine towers.

### Background of the Invention

Marine support structures typically suffer from ageing and degradation, particularly in the 'splash zone', which is the part of the structure that is periodically covered and uncovered by water, for example as a result of tidal range, wave action and/or splashing. Ageing may include corrosion and physical damage caused by wave action and impacts. Degradation may include accumulation of marine growth, such as weed, barnacles etc.

Marine support structures therefore need to be serviced, for example by cleaning, inspection, and coating or painting, to ensure continued performance and to extend their life. Conventionally, servicing is carried out by divers but this can be extremely difficult and hazardous, particularly in the splash zone, and is often not fully effective.

WO-A-2020/096529 discloses apparatus for servicing a structure, comprises cage or frame that carries drive wheels or rollers from driving the frame along the structure and/or tools for servicing the structure. The frame comprises at least two parts connected together by a hinge, so that the frame can be opened to fit around the structure to be serviced, and closed to secure the frame or cage around the structure. A plurality of such frames or cages may be connected together in series around the structure.

Although the frame or cage structure disclosed in WO-A-2020/096529 is comparatively lightweight, there is a need to reduce the weight of this and similar apparatus further.
US 6 371 696 B1 discloses a pylon servicing apparatus capable of traversing the length of a pylon to enable the suite of the pylon to be treated.
US 2014/158171 A1 discloses an apparatus and process for automatically cleaning piles or the like.
CN 110 977 708 A discloses a sea pipe surface cleaning device suitable for the operation of underwater robots.

### Statements of the Invention

The invention is defined by appended claim 1. Preferred embodiments follow from the dependent claims.

According to one aspect of the present invention, there is provided an apparatus of the above type, having a variable buoyancy arrangement comprising a series of buoyancy chambers and a gas supply connected to a first one of the chambers, the chambers being interconnected so that, as gas is supplied to the first one of the chambers and that chamber fills with gas, the gas then begins to escape into the next one of the chambers in the series until that chamber is full of gas, and so on until the series of chambers is full of gas. The supply of gas can be controlled so as to achieve the desired level of buoyancy. The gas may be supplied from an external gas supply, or from a cylinder carried by the apparatus.

The apparatus may comprise a series of modules connected together in series, with each module arranged to service the structure and/or drive the modules along the structure, and each module having at least one said buoyancy chamber. Each module may have its own buoyancy chamber(s) fitted and there may be multiple buoyancy chambers on one module. The buoyancy chamber(s) may have a capacity calculated to give a desired level of buoyancy (e.g. neutral buoyancy) for the module in which they are incorporated.

The buoyancy chambers may be connected together between the series of modules, using gas lines removably connected to ports in the chambers. The connections may be sealed to prevent gas escape, for example by means of O-rings.

The buoyancy chambers may be open at or near an end thereof so that gas can escape from the chambers as the modules ascend without the need to actively control venting. Where the modules are arranged along a substantially vertical structure to be serviced, leakage of gas from the chambers may be reduced or minimised so that very little gas is required to achieve the required level of buoyancy.

The above arrangement provides a simple method of controlling the buoyancy of the modules in water. The arrangement is particular effective for servicing a substantially vertical underwater structure.

### Brief Description of the Drawings

Specific embodiments of the present invention will now be described with reference to the accompanying drawings, in which:
Figure 1 is a perspective view from above of an apparatus in a first example;
Figure 2 is a first side elevation of the apparatus of the first example;
Figure 3 is a second side elevation of the apparatus of the first example, orthogonal to the first side elevation;
Figure 4 is a cross-section through the plane A-A in Figure 2, indicating the position of a support structure;
Figure 5 is a top view of the apparatus of the first example;
Figure 6 is a perspective view from above of an apparatus in a second example;
Figure 7 is a perspective view from below of the apparatus of the second example;
Figure 8 is a first side elevation of the apparatus of the second example;
Figure 9 is a second side elevation of the apparatus of the second example, orthogonal to the first side elevation;
Figure 10 is a cross-section in the plane A-A in Figure 9;
Figure 11 is a cross-section in the plane B-B in Figure 9;
Figure 12 is a top view of the apparatus of the second example;
Figure 13 is a view of a kit of parts for assembly to form apparatus according to the first or second example;
Figure 14 is a diagram of the operations of an apparatus in the examples;
Figure 15 is a diagram of part of a hydraulic system of an apparatus in the examples;
Figure 16 is a diagram illustrating a remote control system for operating an apparatus in the examples;
Figure 17 is a first side elevation of an apparatus in a third example;
Figure 18 is a second side elevation of the apparatus of the third example, orthogonal to the first side elevation;
Figure 19 is a perspective view from above of the apparatus of the third example;
Figure 20 is a bottom view of the apparatus of the third example;
Figure 21 is a top view of the apparatus of the third example;
Figure 22 is a partial cross-sectional view in the plane A-A of Figure 21;
Figure 23 is a diagram showing different configurations of the apparatus of the third example as a traction module, with additional modules;
Figure 24 shows a detailed view of a connection system between modules in the configurations of Figure 23;
Figure 25 is a side elevation of an apparatus in a fourth example;
Figure 26 is a schematic diagram of a first embodiment of the invention; and
Figure 27 is a schematic diagram of a second embodiment of the invention.

### Detailed Description of Embodiments

In the description below, the orientation of the apparatus will be described as assembled around a vertically elongate support structure 30. 'Circumferential' and 'tangential' refers to a circumference around a notional central vertical axis, and 'radial' to a direction perpendicular to that axis.

Where dimensions are shown in the drawings, these are given in millimetres. The dimensions are not limiting on the size of specific embodiments and are provided purely by way of example.

For clarity, not all instances of a particular part are indicated by reference numerals in the drawings. It will be understood by inspection of the drawings as a whole which parts are referred to. Similar parts between different embodiments are indicated by the same reference numeral.

An embodiment of the invention is designed for use with apparatus for servicing a structure as disclosed in WO 2020/096529, examples of which are described below. However, the present invention is not limited to use with those examples.

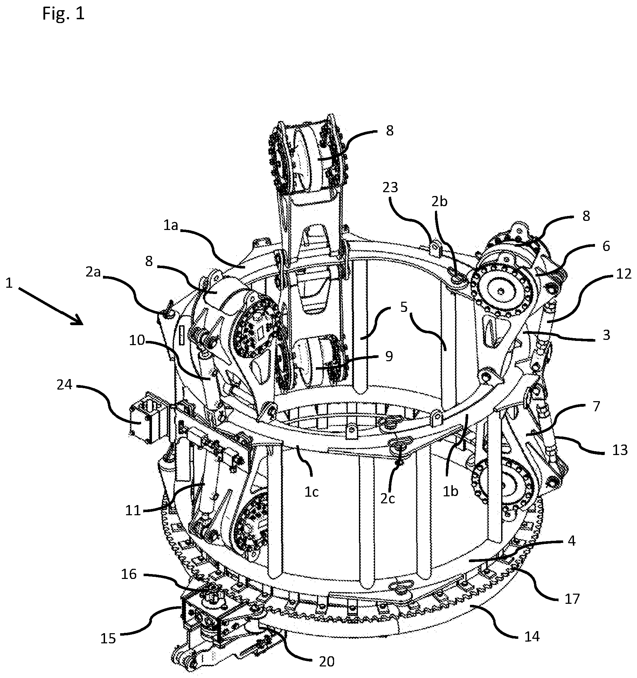

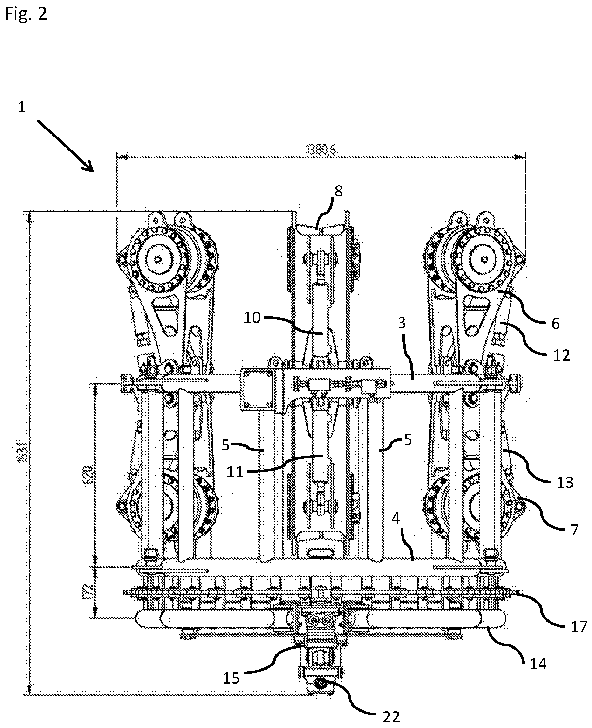

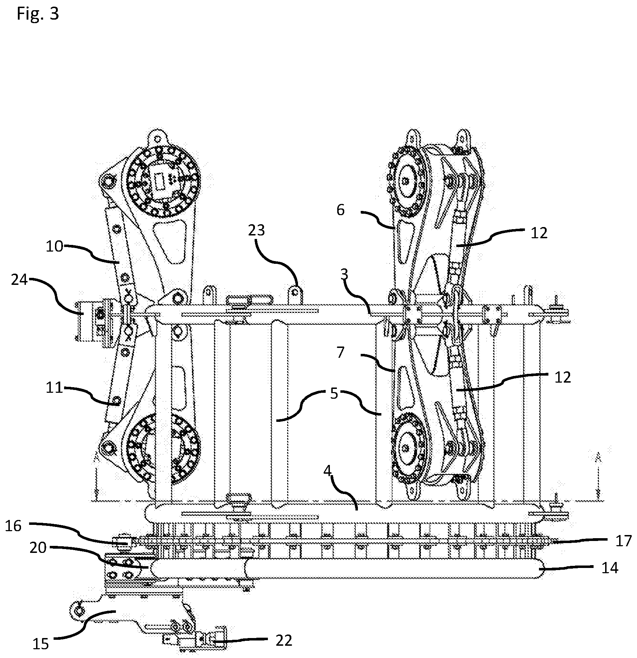

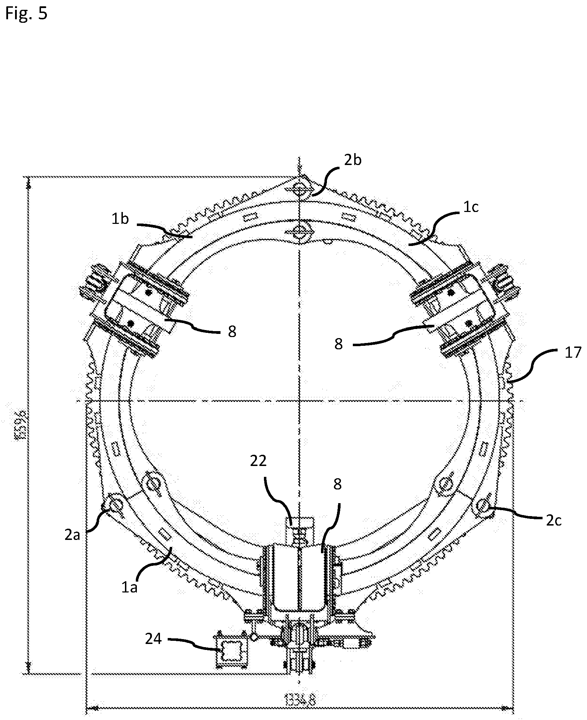

A first example is described below with reference to Figures 1 to 5. A cage or frame 1 comprises cage or frame segments or sections 1a, 1b, 1c which are removably connected together at frame connection points 2a, 2b, 2c, for example using removable pins. In use, the frame segments 1a, 1b, 1c are assembled around the support structure 30 to be serviced. The frame segments 1a, 1b, 1c include lifting points 23 for attachment of cables or the like, for lifting the frame segments 1a, 1b, 1c into position and/or for retrieving them after use. Preferably, each frame segment 1a, 1b, 1c is light enough to be manually lifted into position.

The frame 1 comprises an upper support 3 and a lower support 4, interconnected by struts 5. In this example, the upper and lower supports 3, 4 are circular in shape, and coaxial. The struts 5 extend generally vertically between the upper and lower supports 3, 4. The upper support 3, lower support 4 and struts 5 are preferably substantially rigid and are connected together so that the frame 1, when assembled, is substantially rigid.

A plurality of (in this case 3) pairs of upper and lower arms 6, 7 are connected to the upper support 3 at different circumferential positions, preferably evenly circumferentially spaced around the upper support 3, for example by 120° in this example.

Each arm 6, 7 is pivotally connected to the upper support 3 about a tangential, horizontal pivot axis, for example by means of a respective axle or spindle. In this example, the arms 6, 7 are pivotable about respective axes on the upper and lower sides of the upper support 3, but may alternatively be pivotable about the same axis. The upper and lower arms 6, 7 are pivotable in opposite directions relative to each other so that they can both simultaneously move towards the support structure 30 or away from the support structure 30. The upper and lower arms 6, 7 may be pivotable independently of each other, so that the angle between the upper and lower arms 6, 7 may vary.

Each arm 6, 7 carries a respective wheel, roller or other rotating member 8, 9 arranged to contact the support structure 30. The wheels 8, 9 may have contact surfaces arranged to enhance traction against the support structure 30 and/or to reduce wear to the wheels 8, 9. Each pair of wheels 8, 9, carried by a corresponding pair of arms 6, 7, may be mutually independently rotatable.

At least one of the pairs of arms 6, 7 are reciprocally driveable to pivot towards and away from the support structure 30 so that the corresponding wheels 8, 9 respectively clamp and release the support structure 30. Preferably, this pair of arms 6, 7 is driven by respective hydraulic cylinders 10, 11. The control of the hydraulic cylinders 10, 11 may be interconnected so that the pair of arms is driven in synchronism. The hydraulic cylinders 10, 11 may be supplied by respective hydraulic hoses (not shown), secured by a hose clamp 24.

Others of the pairs of arms 6, 7 may be adjustably held in a pivotal position, for example by adjustable length bars or bottle screws 12, 13, according to the diameter of the support structure 30 to be serviced.

The lower arms 7 are arranged to pass between the struts 5 to enable the corresponding wheels 9 to contact the support structure 30.

At least one of the wheels 8, 9 is driveable reciprocally in either one of opposite directions (e.g. forward and backward) so as to move the apparatus respectively up and down the support structure 30. Preferably, the driveable wheel(s) 8, 9 are provided on the reciprocally driveable arms 6, 7. Others of the wheels 8, 9 may not be driven, but may freely rotate, preferably independently of each other, so as to act as guides for movement of the apparatus up and down the support structure 30.

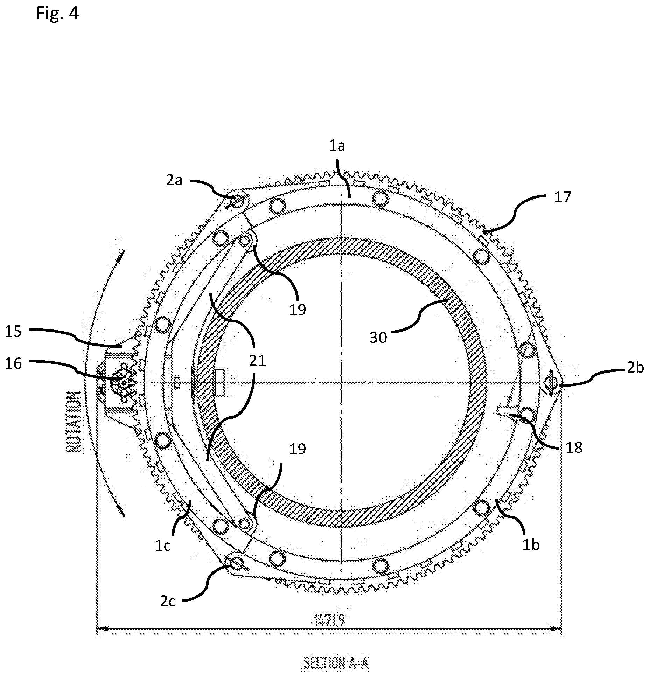

The lower support 4 supports a guide rail 14 for guiding a carriage 15 circumferentially around the lower part of the frame 1. The carriage 15 has a drive gear 16 that engages a gear track 17 arranged circumferentially and horizontally around the lower part of the frame 1. The drive gear 16 is driven so that the carriage 15 moves circumferentially around the guide rail 14. The carriage 15 may be driveable circumferentially through approximately 360°, but preferably the movement of the carriage 15 is limited to one complete rotation by a carriage stop 18 provided adjacent the guide rail 14, as shown in Figure 4.

The carriage 15 preferably does not contact the support structure 30, as accumulation on the support structure 30 could impede the progress of the carriage 15. Instead, the carriage 15 is supported by a pair of inner rollers 19 that contact an inner side of the guide rail 14, and a pair of outer rollers 20 that contact an outer side of the guide rail 14. The inner rollers 19 are mounted on respective carriage arms 21 that extend horizontally to either side of the carriage 15, for improved stability.

In an alternative example, the functions of the guide rail 14 and the gear track 17 may be combined. For example, the gear track 17 and drive gear 16 could be omitted and one or more of the inner or outer rollers 19, 20 may be driven so as the drive the carriage 15 around the guide rail 14. Alternatively, the guide rail 14 may be omitted and the gear track 17 modified so as to provide a guiding function. Instead of a gear/gear track or rack and pinion arrangement, an alternative linear drive arrangement may be used, such as a roller pinion or friction drive.

The carriage 15 is arranged to carry one or more tools 22 for servicing the support structure 30. By moving the frame 1 up and down the support structure 30 using the driveable wheel(s) 8, 9, and moving the carriage 15 circumferentially around the support structure 30, the tool(s) 22 may reach substantially any part of the external surface of the support structure 30, at least within the splash zone and subject to any restrictions due to hydraulic lines and the like.

The tool(s) 22 may be moveably mounted on the carriage 15, to allow movement of the tool(s) 22 relative to the carriage 15. For example, the tool(s) 22 may be reciprocally driveable towards and away from the support structure 30, for example in a radial direction.

Examples of the tool(s) that may be mounted either singly or together on the carriage 15, and which may be interchangeable, include:
- a high-pressure water nozzle for cleaning the surface of the support structure 30
- a wall thickness measuring probe for measuring the wall thickness of the support structure 30, for example using ultrasound
- a video camera 27 for inspection of the servicing site
- a clearance sensor for sensing clearance from the surface of the support structure
- a painting tool, such as a paint roller or brushes, for painting the surface of the support structure 30
- a wrapping tool for applying a protective wrapping to the support structure 30
- a cutting tool for cutting a part of the support structure 30, for example using high-pressure abrasive cutting.

In the second example, the carriage 15 carries a camera 27, such as a video camera, in addition to a cleaning tool 22.

The apparatus may include one or more distance sensors, to determine the distance travelled along the support structure 30. The distance sensor(s) may for example determine the number of rotations of the wheel(s) 8, 9, for example by using one or more optical or magnetic angular position sensors.

The carriage 15 may include one or more rotational position sensors (e.g. optical or magnetic sensors) able to detect an absolute or relative circumferential position of the carriage 15 relative to the frame 1, for example by detecting reference position markings on the guide rail 14 or the gear track 17.

The distance sensor(s) and/or rotational position sensors (s) may be used to determine the position of the tool 22, carriage 15 or another part of the apparatus on the support structure 30. This may allow the apparatus to travel to a predetermined absolute position or to return to a previously visited position, for example where an anomaly or discrepancy has been detected.

The apparatus may be aligned with one or more reference marks on the support structure 30, to allow the apparatus to return to a previously visited position relative to the reference marks. In one example, a horizontal and/or vertical visible mark is made on the support structure 30 corresponding to an initial position of one or more parts of the apparatus, such as the vertical position of the upper support 3 and the circumferential position of a predetermined one of the struts 5, identified for example by a marking such as a distinguishing paint marking. The distance sensor(s) is set to zero. The carriage 15 is to its maximum circumferential position (either clockwise or anti-clockwise), and the rotational position sensor(s) is set to zero. As the apparatus moves along the support structure 30, the distance sensor(s) and rotational position sensor(s) measure the distance travelled in an axial and circumferential direction relate to the initial position. This enables the position of any anomaly or discrepancy on the support structure to be mapped and returned to, if required.

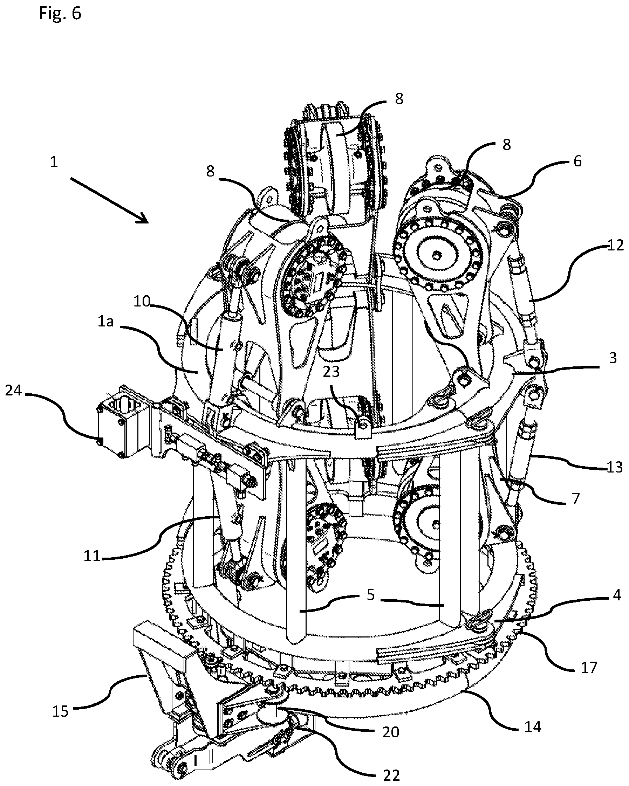

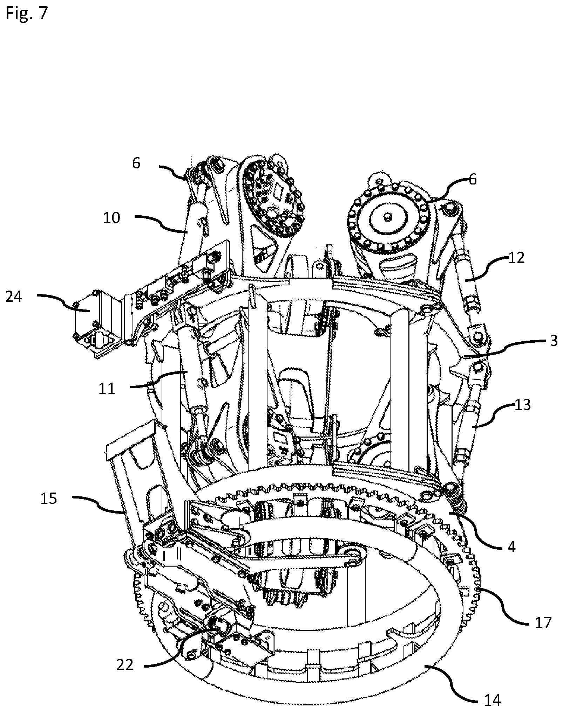

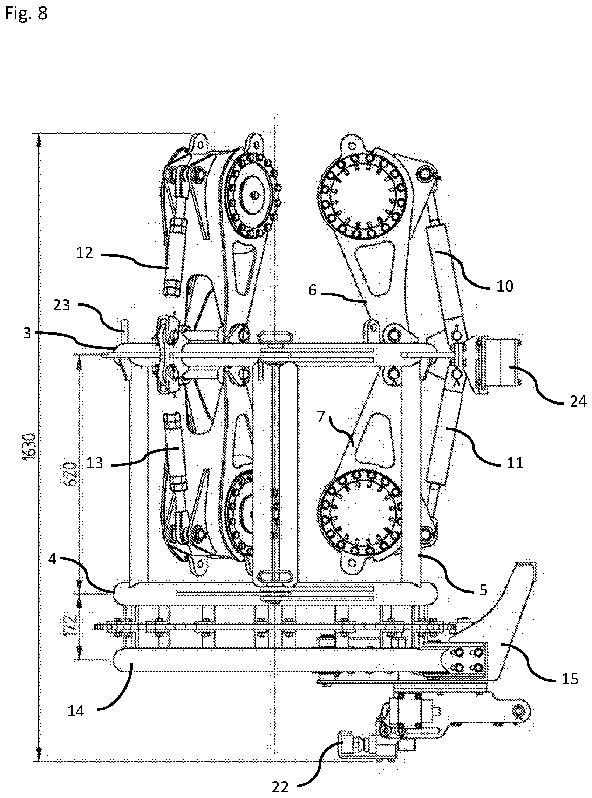

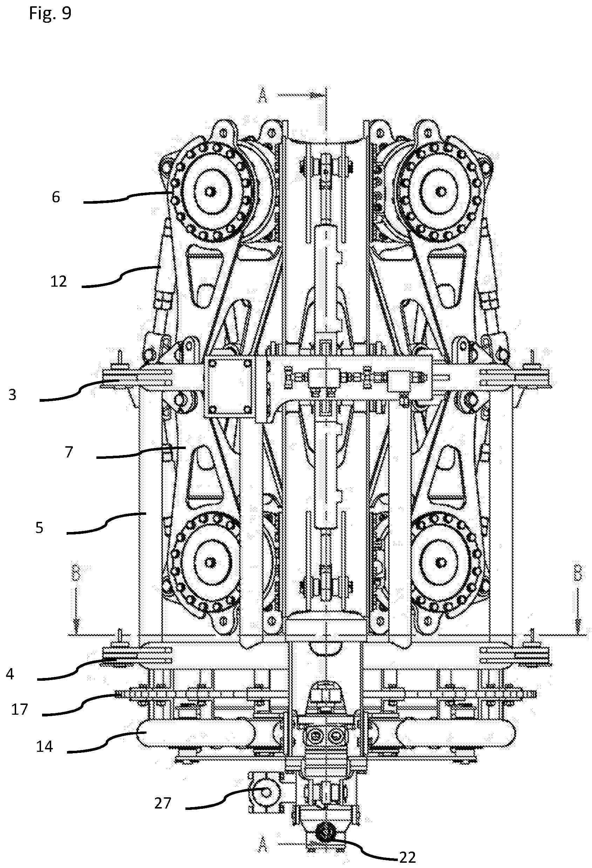

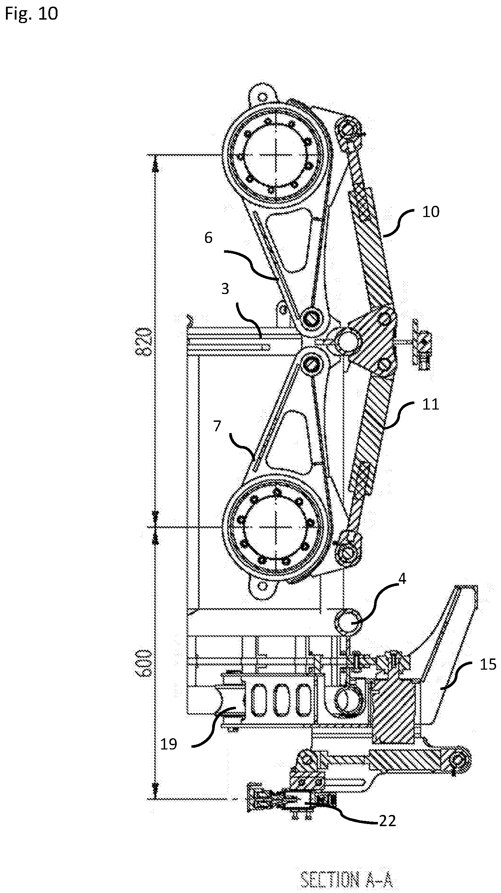

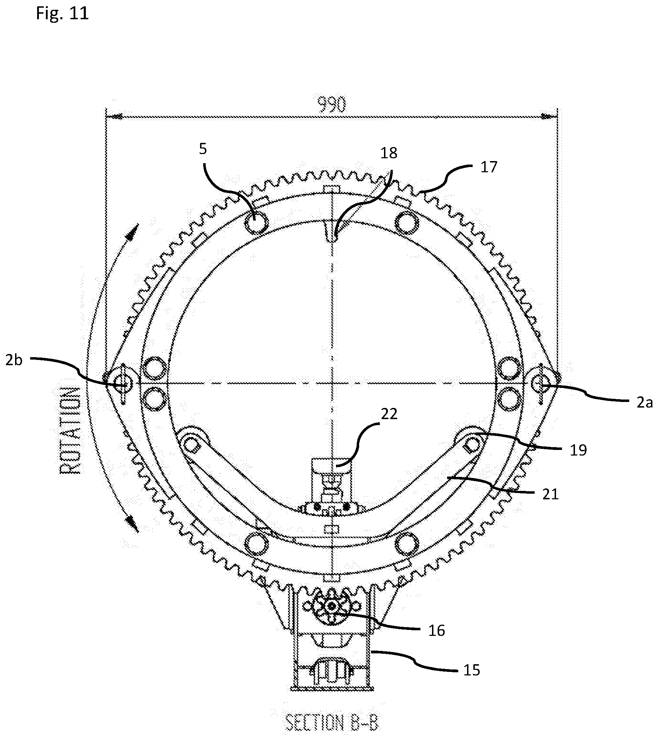

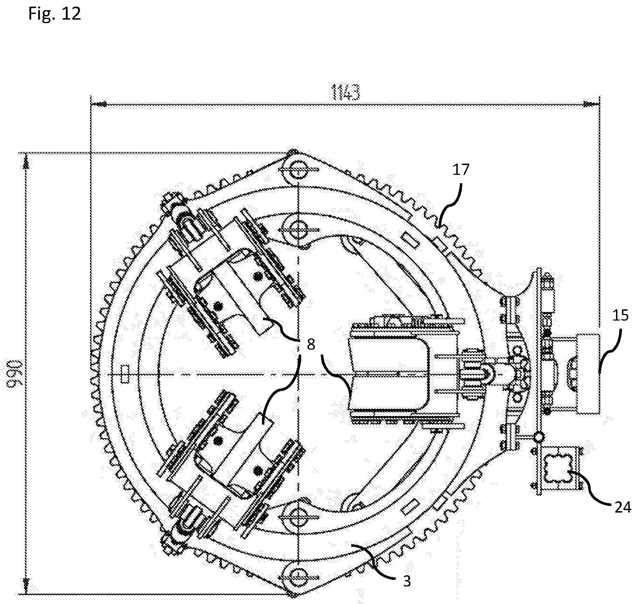

The first example is designed to service support structures 30 with a diameter in the range 22 - 36 inches (0.56-0.91 metres). Alternative examples of different sizes and/or numbers of frame segments 1a, 1b, 1c may be provided to service support structures of other diameters. For example, Figures 6 to 12 show a second example which is similar in construction to the first example but has a frame 1 of smaller diameter designed to service a support structure 30 with a diameter in the range 9⅝ - 22 inches (0.24 - 0.56 metres). The frame 1 comprises two frame segments 1a, 1b, which are semi-cylindrical and are assembled together to form a cylindrical frame 1.

The second example has three pairs of upper and lower arms 6, 7 as in the first example, evenly spaced around the upper support 3. In other examples, particularly those designed for servicing support structures of larger diameter, there may be more than three pairs of arms 6, 7.

The arms 6, 7, together with the wheels 8, 9, hydraulic cylinders 10, 11 and adjustable length bars 12, 13, may be removably attached to the frame segments 1a, 1b, 1c. These components may then be interchangeably used with the frame segments 1a, 1b, 1c of the first example and the frame segments 1a, 1b of the second example. Different carriages 15 may be required for the first and second examples, due to the different radius of curvature. Alternatively, a single adjustable carriage 15 may be interchangeably used between the first and second examples, for example with adjustable carriage arms 21.

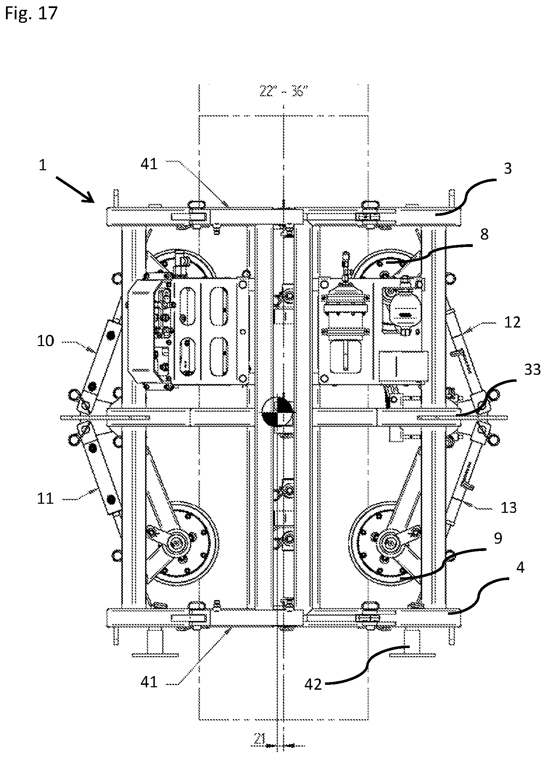

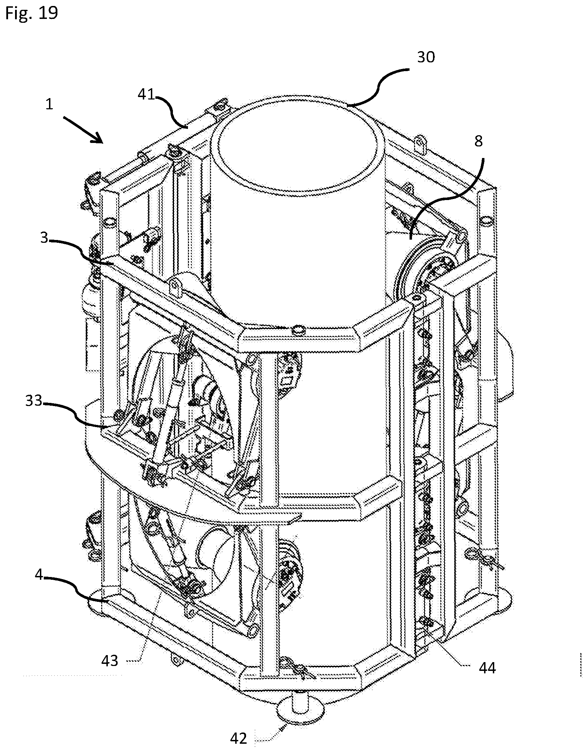

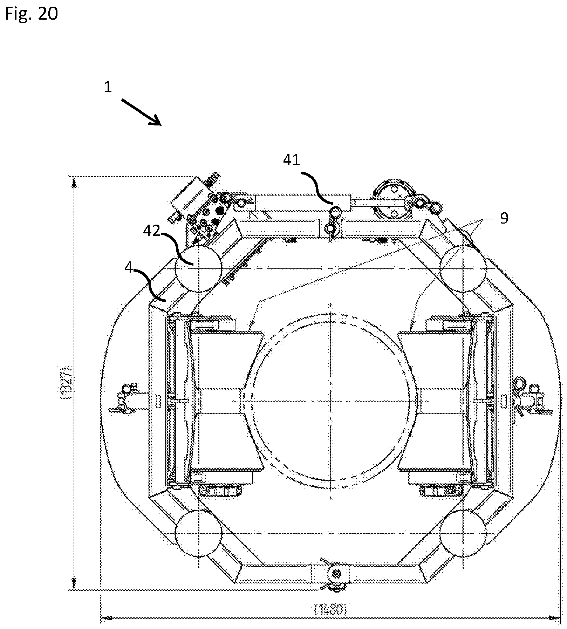

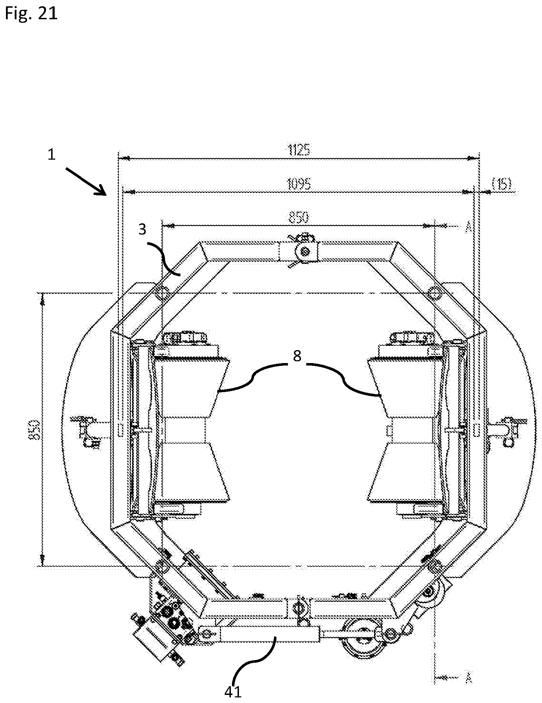

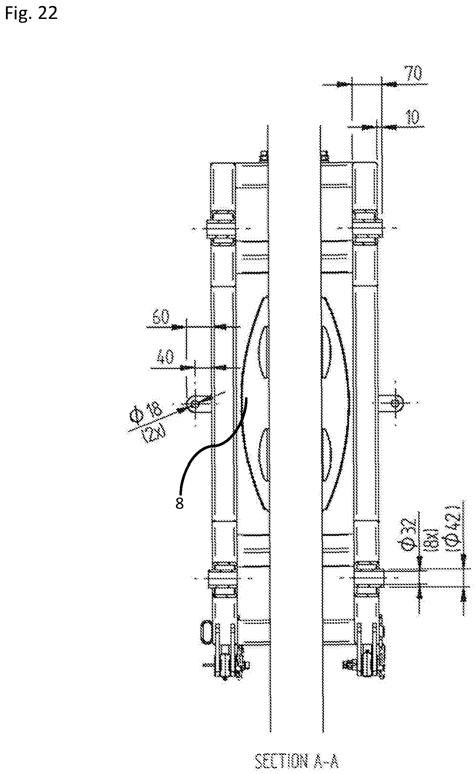

Figures 17 to 22 show an apparatus in a third example, which differs from the first and second examples in that the cage or frame 1 includes a middle support 33 to which two pairs of upper and lower arms 6, 7, carrying corresponding wheels 8, 9, are connected. Hence, the cage 1 comprises three annular horizontal pieces (lower support 3, middle support 33 and upper support 4) connected together by vertically extending struts 5 to form a generally cylindrical structure. Hence, the third example can be thought of as a development of the first and second examples in which the middle support 33 performs a similar function to the upper support 4 of the first and second examples, and the upper support 4 of the third example is an additional structural part that extends beyond the upper arms 6.

The cage 1 comprises two semi-cylindrical sections 1a, 1b hingedly connected together at connection points 2a, 2b, and lockable together, similarly to the second example. The cage in this example may designed in a larger version for fitting around structures 30 with a diameter of between 22 and 36 inches (0.56 - 0.91 m), or in a smaller version for structures 30 with a diameter of between 8 and 22 inches (0.20-0.56 m).

One pair of arms 6, 7 has a corresponding pair of actuating cylinders 10, 11, while the other pair of arms has a corresponding pair of adjustable length bars 12, 13. The wheels 8, 9 of at least one pair of arms 6, 7 are reciprocally drivable to as to move the apparatus up and down the structure 30.

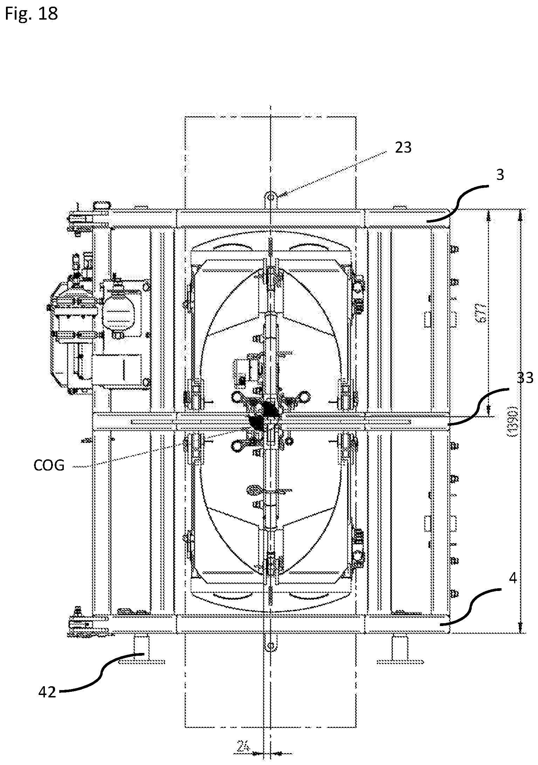

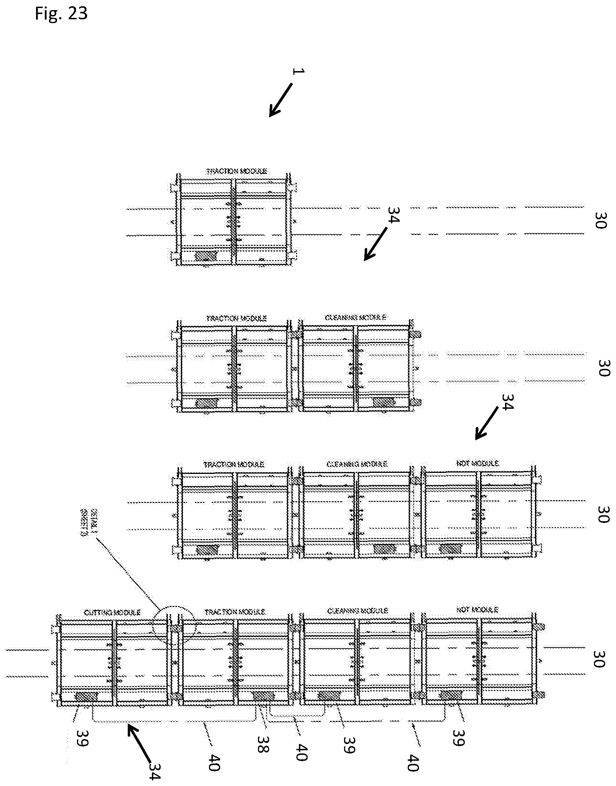

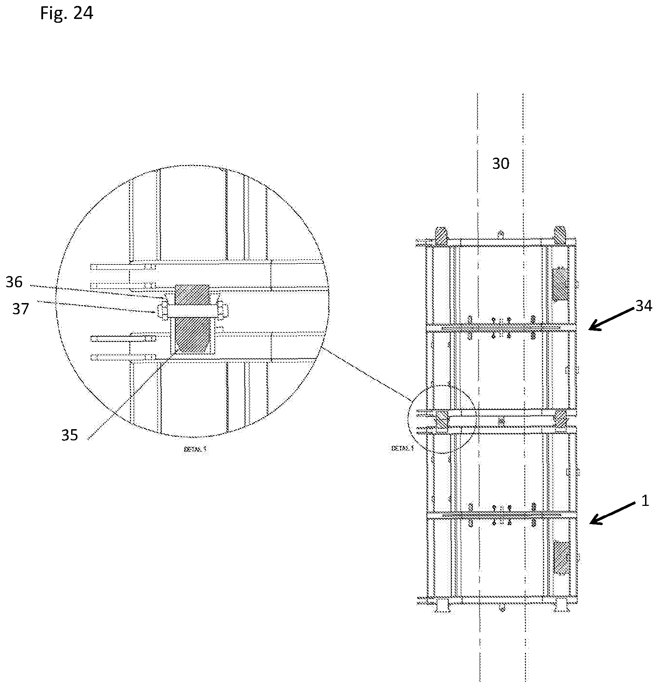

In this example, the apparatus has no guide rail 14 or carriage 15 for carrying tools 22. Hence, the centre of gravity (COG) is close to the geometric centre of the cage 1, as shown in Figures 17 and 18. As shown in Figures 23 and 24, the apparatus is configured as a traction module for connection in series along and around the structure 30 to one or more servicing modules 34, such as a cleaning module, NDT (non-destructive testing) module and/or cutting module. Each additional module comprises a cage or frame of similar construction to that of the traction module, and may comprise two or more pairs of arms 6, 7 with corresponding wheels 8, 9 similar to that of the traction module, except that none of the wheels 8, 9 of the additional module are driveable; instead the servicing modules 34 are driven along the structure 30 by the traction module. Alternatively, the one or more servicing modules may be moved along the structure 30 by some other means, such as one or more winches attached to the structure 30 or to a platform.

The distance travelled along the structure 30 may be measured by a measuring wheel 43 that is supported by the frame 1, for example by middle support 33, and is pivotable into contact with the structure 30. The measuring wheel may be an encoding wheel from which the distance travelled may be detected optically and/or electronically.

As shown in Figure 24, adjacent first and second modules may be connected together by one or more first docking parts on a first module that docks with a corresponding one or more second docking parts of the second module; for example, the first docking part(s) may comprise one or more male docking probes 35 and the second docking part(s) may comprise one or more receptacle(s) 36 into which the corresponding male docking probe(s) 35 fit. The connection may be secured by a locking system such as a quick release bolt 37 that passes through apertures in the male docking probe and the receptacle. Alternative docking and/or securing mechanisms may be used.

The traction module may have a plurality of feet 42 attached to the lower support 4. Preferably, the feet 42 are removable to allow connection of an additional module below the traction module.

The traction module includes a master controller 38 that is removably connectible by leads 40 to one or more corresponding slave controllers 39 on the one or more additional modules. The master controller 38 is controlled from the surface by the remote control unit 25, and passes communication signals and/or electrical power to the slave controllers 39.

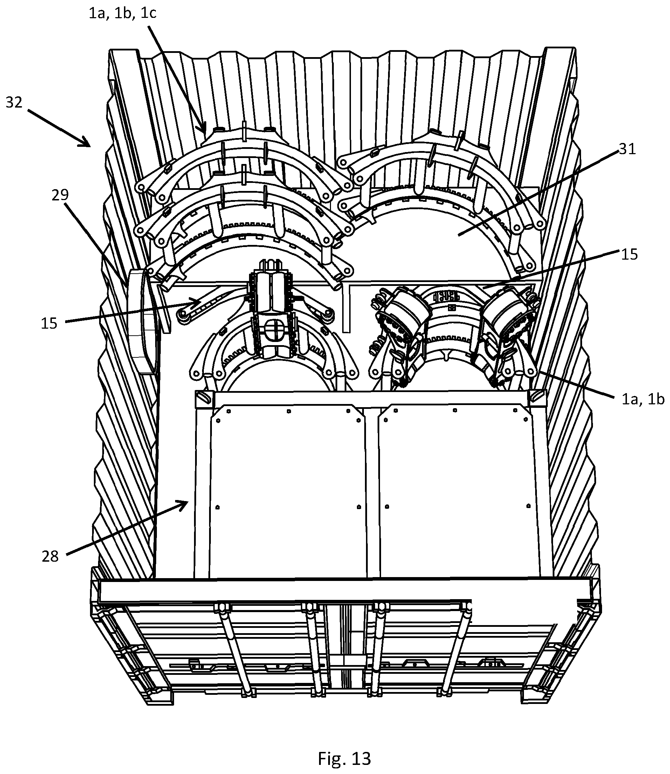

The components of any of the examples may be provided as a kit of parts. For example, Figure 13 shows a kit of parts that may be provided to allow apparatus of either the first or second example to be assembled, comprising at least the frame segments 1a, 1b, 1c of the first example, the frame segments 1a, 1b of the second example, the arms 6, 7, together with the wheels 8, 9, hydraulic cylinders 10, 11 and adjustable length bars 12, 13 (shown here attached to the frame segments 1a, 1b of the second example), carriages 15 for the first and second examples, a set of hydraulic hoses 29, and a hydraulic power supply 28. In this example, the kit of parts is provided in a transportable container 32 including a workbench 31, to facilitate partial assembly of the apparatus before assembly around the support structure 30.

In examples designed for support structures 30 of only one diameter, or a small range of diameters, some of the non-driven pairs of arms 6, 7 and wheels 8, 9 may be replaced by other types of guides, such as rollers or wheels of fixed radial position.

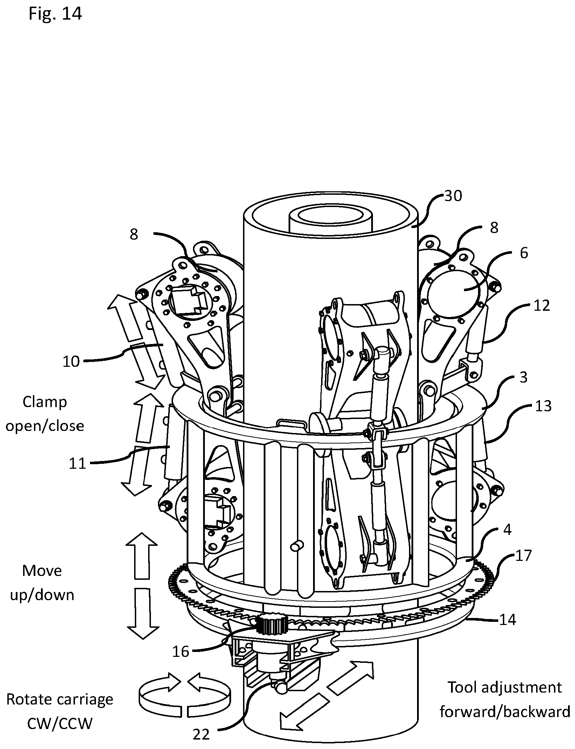

Figure 14 shows examples of driveable functions of the apparatus such as the examples as described above:
i. Clamp open/close, by driving the drivable pivotable upper and lower arms 6, 7 so as to pivot radially outwards/inwards respectively;
ii. Move up/down, by driving the drivable wheel(s) 8, 9 in contact with the surface of the support structure 30 in forward/reverse directions respectively;
iii. Rotate carriage clockwise/anticlockwise, by driving the drive gear 16 in forward/reverse direction respectively;
iv. Tool adjustment forward/backward, by driving the tool 22 radially forward/backward respectively, with respect to the carriage 15.

The driveable functions may be each be powered and/or controlled by hydraulic or electric power, for example by hydraulic hoses and/or electrical cables connected to the apparatus. Hydraulic power is preferable for at least some applications, for example in order to reduce the weight of the apparatus and/or to avoid the use of electricity in a marine environment. A hydraulic power unit may be mounted on a platform and connected to the apparatus by flexible hydraulic hoses.

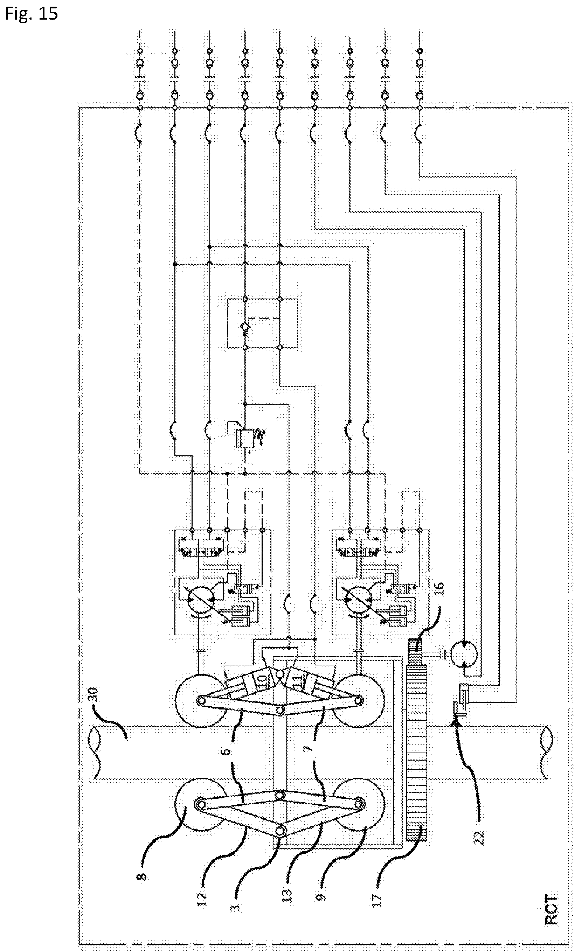

An example of a hydraulic drive system for the apparatus is shown in Figure 15, in which the pivoting of one of the pairs of arms 6, 7, the rotation of the corresponding wheels 8, 9, and in the case of the first and second examples, the rotation of the drive gear 16, and the reciprocal driving of the tool 22 are driven by separate hydraulic lines, connected to a hydraulic power unit (not shown).

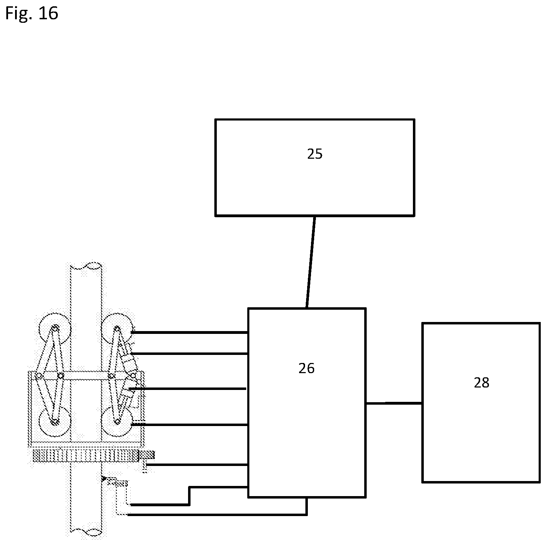

The apparatus is preferably controlled by a remote control unit 25, as shown for example in Figure 16, which allows control of some or all of the functions described above, preferably by means of corresponding user actuable controls. The remote control unit 25 may be connected by a wired or wireless connection to a controller 26 of the functions described above. Power for driving the functions may be provided by a power supply 28, under the control of the controller 26.

Preferably, the drive speeds of the wheels 8, 9 and of the drive gear 16 are controllable independently to adjust for the servicing required. Alternatively or additionally, the remote control unit 25 or controller 26 may be programmable or programmed to carry out a particular service by coordinated control of the different functions, optionally in response to the distance travelled as detected by the distance sensor(s), and/or the circumferential position of the carriage 15 as detected by the circumferential position sensor(s). This may enable a predetermined section of the support structure 30 to be serviced.

The pivot angle of the arms 6, 7 may be varied during use, for example to allow the apparatus to be driven up or down a sloping or curved support member.

The number of wheels 8, 9 that are powered may be varied according to the load to be carried by the apparatus or the operating conditions of the apparatus. The pivoting of more than one of the pairs of arms 6, 7 may be powered, depending on the adjustability or clamping force required.

Examples may be used for servicing tapering support structures, by varying the degree of pivoting of the arms 6, 7 to adjust for varying diameter as the apparatus moves up and down the support structure.

In an alternative example, the arms 6, 7 may be mounted on the lower support 4 and the guide rail 14 may be mounted on the upper support 3.

Preferably, the frame segments 1a, 1b, 1c are constructed of aluminium tube so as to be lightweight. For example, the mass of the apparatus, excluding hydraulic or electrical lines, may be in the range 200-300 kg.

For larger examples, the method of closure by removable pins may be replaced by a hydraulic closure method, in which two or more of the cage or frame segments 1a, 1b, 1c are connected together with hinged connections, actuated for example by hydraulic rams or cylinders 41, as shown for example in Figure 17. The segments 1a, 1b, 1c may be connected together on a suitable surface such as a floating pontoon or barge, supported for example by the feet 42. The hinged connections may be opened such that the cage or frame 1 fits around the support structure 30 to be serviced, then closed so as to secure the frame 1 around the structure 30. The segments 1a, 1b, 1c may be secured together by one or more locking mechanisms, such as locking cylinders 44, which may be hydraulically actuated.

The above examples are designed for servicing a circular cylindrical support structure 30 such as a pile, and therefore the frame 1 is approximately circular cylindrical, having an inner diameter slightly larger than the diameter of the support structure 30. Alternative examples may have alternative shapes and sizes to match the type of support structure 30 which they are designed to service. For example, a square or rectangular cylindrical frame 1, preferably with a pair of arms 5, 6 on each of the four sides, may be used in an example designed for servicing a square or rectangular cylindrical support structure 30.

The above examples may be used in a marine or aquatic splash zone, or at a shallow depth below the surface, such as 10 metres. The examples may be modified for operation below 10 metres in depth, for example by the use of suitable hydraulic seals. The examples may be used for servicing pipes, to the extent that they are not impeded by the support of the pipes.

Alternative examples may be used for servicing non-marine or on-shore support structures, such as wind turbines or radio masts. For these applications, the frame segments 1a, 1b, 1c may be provided with one or more detachable or permanently attached wheels for or other transport members, allowing the frame segments to be moved into position around the support structure, along the ground. For example, each frame segment 1a, 1b, 1c may have one or more wheels attached at each side and an additional removable wheel on a truss at the apex of a triangle formed by two wheels on the frame 1 and on the outside of the frame. The segments 1a, 1b, 1c may then be assembled or closed around the support structure 30, for example by means of removable pins or by the hydraulic rams as described above.

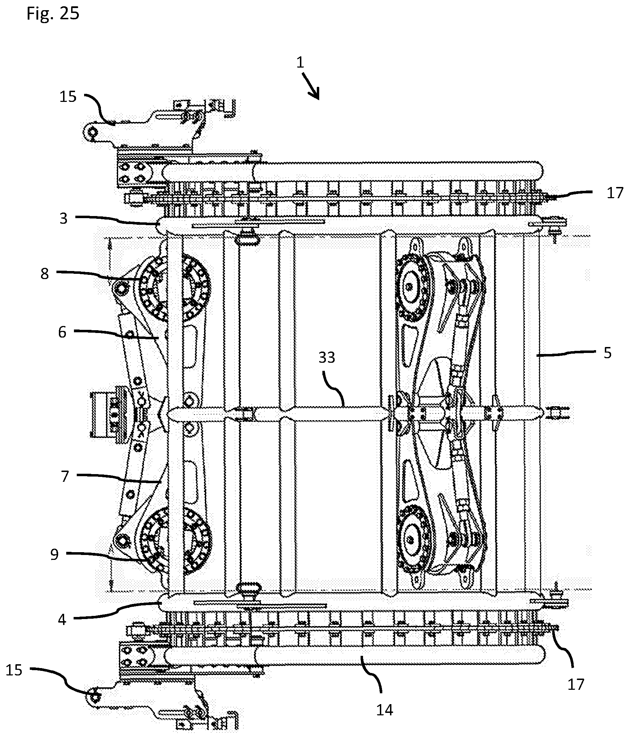

Figure 25 shows apparatus in a fourth example. This example has a frame 1 with upper and lower supports 3, 4 and a middle support 33 on which upper and lower arms 6, 7 carrying respective wheels 8, 9 as in the third example. The upper and lower arms 6, 7 are positioned between adjacent struts 5 and pass between the struts 5 so that the wheels 8, 9 can contact the structure.

As in the third example, the mounting of the upper and lower arms 6, 7 on the middle support leaves the upper and lower supports 3, 4 clear. This enables a guide rail 14 and gear track 17 carrying a tool carriage 15, similar to those of the first and second examples, to be mounted on each of the upper and lower supports 3, 4. This arrangement increases the capacity of the apparatus to carry tools on a single module.

The apparatus of the fourth example is particularly suitable for servicing the towers of wind turbines. The positions of the upper and lower arms 6, 7 may be controlled independently to accommodate a tapered tower.

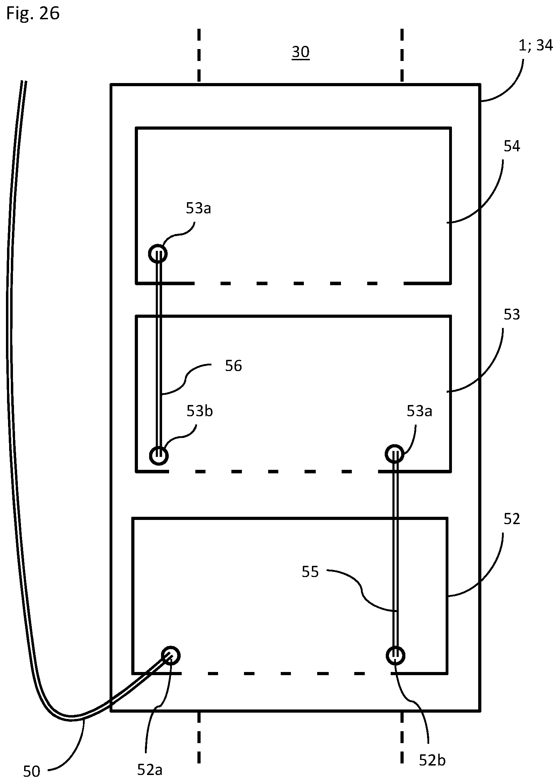

A first embodiment of the present invention will now be described with reference to Figure 26, which shows in outline a module as described above, such as a traction module 1 or a service module 34, having a plurality of buoyancy chambers 52, 53, 54 provided therein and arranged in series, one above the other. Each of the buoyancy chambers 52, 53, 54 is at least partially open at or around their lower ends, allowing water or gas to escape. A first, lowest buoyancy chamber 52 is supplied with gas (e.g. air) through a hose or gas line 50, removably attached to an input port 52a. Gas may be supplied from a remote pump, or from a cylinder or other form of gas tank carried by the module 1, 34. The supply of gas may be controlled by a valve, for example in the input port 52a.

The gas displaces water within the first buoyancy chamber 52 until it is substantially full of gas, at which point the gas escapes through output port 52b and gas line 55 to input port 53a of the middle buoyancy chamber 53, which then displaces water therefrom until the gas reaches an output port 53b and passes through a gas line 56 to the third, uppermost buoyancy chamber 54 and displaces water therefrom.

The supply of gas through the gas lines 55 and 56 may be controlled by further valves e.g. in one or more ports 52b, 53, 53b, but this is not essential. For simplicity, only the input of gas to the input port 52a may be controlled.

In this way, the buoyancy chambers 52, 53, 54 may be filled with gas and provide a level of buoyancy corresponding substantially to the displacement of the combined volume of the buoyancy chambers 52, 53, 54. If the module 1 increases in depth (e.g. by travelling down a substantially vertical underwater structure), the gas within the buoyancy chambers 52, 53, 54 compresses and reduces in volume as water pressure increases and the gas pressure is equalised with the water pressure due to the buoyancy chambers being open at or around their lower ends. To counter this, more gas may be supplied through the gas line 50, without the risk of over-pressurising since excess gas leaks out of the open lower ends of the buoyancy chambers 52, 53, 54. If the module 1 decreases in depth (e.g. by travelling up a substantially vertical underwater structure) and the gas decompresses and increases in volume, with the excess volume of gas escaping from the lower ends of the buoyancy chambers 52, 53, 54.

The buoyancy chambers 52, 53, 54 may be substantially rigid and may be made of fibreglass, plastic or aluminium, for example. They may be fitted in any available space within the module 1, 34, such as between struts 5, without impeding operation of the module 1, 34.

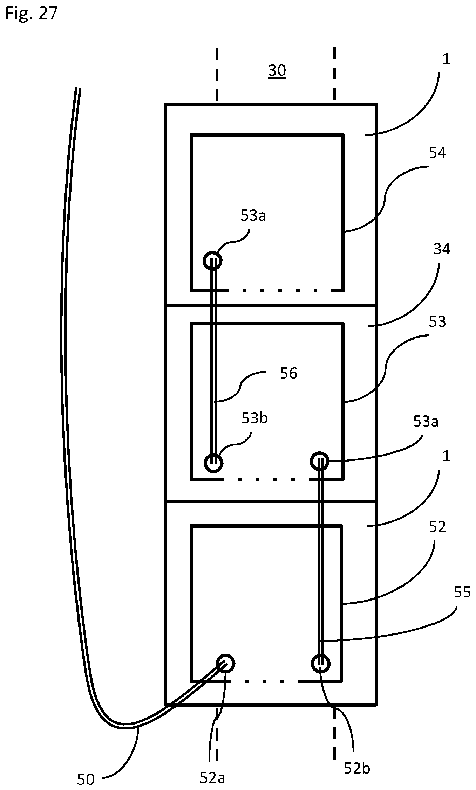

In a second embodiment shown in Figure 27, the arrangement is similar to that of the first embodiment except that the buoyancy chambers 52, 53, 54 are provided on respective different modules 1, 34 connected together in series along a substantially vertical structure 30, as shown for example in Figures 23 and 24. The gas lines 55, 56 may be removably connected between the respective ports 52b, 53a and 53b, 53a using removable sealed connectors e.g. having O-ring seals. Each buoyancy chamber 52, 53, 54 may have a displacement calculated to provide the required level of buoyancy of the module 1, 34 in which it is provided. In this way, a series of modules 1, 34 may be connected together with the required overall level of buoyancy.

Aspects of the first and second embodiments may be combined e.g. one or more of the modules 1, 34 in the second embodiment may have more than one buoyancy chamber as in the first embodiment, but with the uppermost buoyancy chamber of a lower module 1, 34 connected by a gas line to the lowermost buoyancy chamber of an adjacent upper module 1, 34.

Alternative embodiments of the invention, which may be apparent to the skilled person on reading the above description, may fall within the scope of the invention as defined by the accompanying claims.

## Claims

1. Apparatus for servicing an elongate underwater structure (30), comprising at least one module (34) for arrangement around the structure (30) and configured for servicing the structure and/or transport along the structure (30), the apparatus including a first buoyancy chamber (52) having a gas input (52a), the first buoyancy chamber (52) being arranged to allow gas from the gas input (52a) to displace water from the first buoyancy chamber (52), the apparatus further including a second buoyancy chamber (53) **characterised by** being connected directly or indirectly in series by a gas line (50) to the first buoyancy chamber (52) such that gas is able to pass from the first buoyancy chamber (52) to the second buoyancy chamber (53) and thereby displace water from the second buoyancy chamber (53).

2. Apparatus of claim 1, wherein the apparatus comprises at least first and second said modules (34), having respectively the first (52) and second buoyancy chambers (53) provided thereon.

3. Apparatus of claim 2, wherein the first and second modules (34) are removably connectable together along the structure (30) and the gas line (50) is removably connectable between the first (52) and second buoyancy chambers (53).

4. Apparatus of any preceding claim, wherein the second buoyancy chamber (53) is arranged above the first buoyancy chamber (52).

5. Apparatus of any preceding claim, wherein the or each said buoyancy chamber (52, 53) is open at or around a lower end thereof so as to allow water to be displaced by said gas.

6. Apparatus of any preceding claim, including a valve arranged to control supply of gas through the gas input (52a).

7. Apparatus of any preceding claim, including a gas supply provided on at least one said module (34).

## Patentansprüche

1. Vorrichtung zum Warten einer länglichen Unterwasserstruktur (30) mit mindestens einem Modul (34) zum Anordnen um die Struktur (30) herum, die zum Warten der Struktur und/oder zum Transportieren entlang der Struktur (30) ausgelegt ist, wobei die Vorrichtung eine erste Auftriebskammer (52) mit einem Gaseingang (52a) aufweist, wobei die erste Auftriebskammer (52) so angeordnet ist, dass Gas aus dem Gaseingang (52a) Wasser aus der Auftriebskammer (52) verdrängen kann, wobei die Vorrichtung ferner eine zweite Auftriebskammer (53) aufweist, die **dadurch gekennzeichnet ist, dass** sie über eine Gasleitung (50) direkt oder indirekt mit der ersten Auftriebskammer (52) in Reihe geschaltet ist, so dass Gas aus der ersten Auftriebskammer (52) in die zweite Auftriebskammer (53) strömen und somit Wasser aus der zweiten Auftriebskammer (53) verdrängen kann.

2. Vorrichtung nach Anspruch 1, wobei die Vorrichtung zumindest ein erstes und ein zweites solches Modul (34) umfasst, an denen die erste Auftriebskammer (52) beziehungsweise die zweite Auftriebskammer (53) vorgesehen ist.

3. Vorrichtung nach Anspruch 2, wobei sich das erste und das zweite Modul (34) entlang der Struktur (30) abnehmbar miteinander verbinden lassen und sich die Gasleitung (50) abnehmbar an die erste Auftriebskammer (52) und die zweite Auftriebskammer (53) anschließen lässt.

4. Vorrichtung nach einem der vorhergehenden Ansprüche, wobei die zweite Auftriebskammer (53) über der ersten Auftriebskammer (52) angeordnet ist.

5. Vorrichtung nach einem der vorhergehenden Ansprüche, wobei die oder jede Auftriebskammer (52, 53) an einem unteren Ende oder um dieses herum offen ist, damit Wasser von dem Gas verdrängt werden kann.

6. Vorrichtung nach einem der vorhergehenden Ansprüche mit einem Ventil, das so angeordnet ist, dass es eine Gaszufuhr über den Gaseingang (52a) regelt.

7. Vorrichtung nach einem der vorhergehenden Ansprüche mit einer Gaszufuhr, die an mindestens einem solchen Modul (34) vorgesehen ist.

## Revendications

1. Appareil d'entretien d'une structure (30) sous-marine allongée, comprenant au moins un module (34) destiné à être agencé autour de la structure (30) et conçu pour l'entretien de la structure et/ou le transport le long de la structure (30), l'appareil comprenant une première chambre de flottabilité (52) présentant une entrée de gaz (52a), la première chambre de flottabilité (52) étant agencée pour permettre à un gaz provenant de l'entrée de gaz (52a) de déplacer de l'eau à partir de la première chambre de flottabilité (52), l'appareil comprenant en outre une seconde chambre de flottabilité (53) **caractérisée en ce qu'**elle est directement ou indirectement reliée en série par une canalisation de gaz (50) à la première chambre de flottabilité (52) de sorte qu'un gaz puisse passer de la première chambre de flottabilité (52) à la seconde chambre de flottabilité (53) et ainsi déplacer de l'eau à partir de la seconde chambre de flottabilité (53).

2. Appareil selon la revendication 1, dans lequel l'appareil comprend au moins des premier et second dits modules (34), présentant respectivement les première (52) et seconde (53) chambres de flottabilité disposées sur ceux-ci.

3. Appareil selon la revendication 2, dans lequel les premier et second modules (34) peuvent être reliés de manière amovible conjointement le long de la structure (30) et la canalisation de gaz (50) peut être reliée de manière amovible entre les première (52) et seconde (53) chambres de flottabilité.

4. Appareil selon l'une quelconque des revendications précédentes, dans lequel la seconde chambre de flottabilité (53) est agencée au-dessus de la première chambre de flottabilité (52).

5. Appareil selon l'une quelconque des revendications précédentes, dans lequel la ou chaque chambre de flottabilité (52, 53) est ouverte au niveau ou autour d'une extrémité inférieure de celle-ci de manière à permettre à de l'eau d'être déplacée par ledit gaz.

6. Appareil selon l'une quelconque des revendications précédentes, comprenant une soupape conçue pour commander l'alimentation en gaz à travers l'entrée de gaz (52a).

7. Appareil selon l'une quelconque des revendications précédentes, comprenant une alimentation en gaz disposée sur au moins un dit module (34).
